# EUROPÄISCHE PATENTSCHRIFT

(11) **EP 3 829 834 B1**
(45) Veröffentlichungstag und Bekanntmachung des Hinweises auf die Patenterteilung: **22.11.2023**
(21) Anmeldenummer: 19753271.6
(22) Anmeldetag: 31.07.2019
(51) Int. Cl.: B25J 15/04, B25J 15/02, B25J 19/02, B23Q 3/155

(54) **VERFAHREN ZUR IDENTIFIKATION EINER KOMPONENTE EINES AUTOMATISIERUNGS- ODER EINES SPANNSYSTEMS UND ZUGEHÖRIGE KOMPONENTE**
METHOD FOR IDENTIFYING A COMPONENT OF AN AUTOMATION OR A CLAMPING SYSTEM AND ASSOCIATED COMPONENT
PROCÉDÉ D'IDENTIFICATION D'UN COMPOSANT D'UN SYSTÈME D'AUTOMATISATION OU D'UN SYSTÈME DE SERRAGE ET COMPOSANT ASSOCIÉ

(30) Priorität: 03.08.2018 DE 102018118968
(43) Veröffentlichungstag der Anmeldung: 09.06.2021
(73) Patentinhaber: Schunk GmbH & Co. KG Spann- und Greiftechnik, 74348 Lauffen am Neckar (DE)
(72) Erfinder: FLAXMEYER, Florian, 74074 Heilbronn (DE); STANICKI, Andreas, 74226 Nordheim (DE); GREWE, Jan, 74336 Brackenheim (DE); FELLHAUER, Bruno, 74336 Brackenheim (DE)
(74) Vertreter: DREISS Patentanwälte PartG mbB
(86) Internationale Anmeldenummer: PCT/EP2019/070614
(87) Internationale Veröffentlichungsnummer: WO 2020/025666

(56) Entgegenhaltungen:
- DE-A1- 3 813 708
- JP-A- H03 239 451
- JP-A- S61 182 740
- Anonymous: "BMF Sensors for Pneumatic Cylinders", , 31. August 2010 (2010-08-31), XP055645228, Gefunden im Internet: URL:https://www.htetechnologies.com/data/s iteshare/Article/byid/1006/files/Balluff_B MF.pdf [gefunden am 2019-11-21]

## Beschreibung

Die Erfindung betrifft ein Verfahren zur Identifikation einer Komponente eines Automatisierungs- oder eines Spannsystems und eine Komponente als solche.

Unter Komponenten eines Automatisierungssystems werden insbesondere in Robotersystemen verbaute oder an Robotersysteme anbaubare Komponenten wie Greifeinheiten, Lineareinheiten, Schwenkeinheiten, oder sonstige Einheiten, wie beispielsweise Glieder von Roboterarmen verstanden. Unter Komponenten eines Spannsystems werden insbesondere Spannvorrichtungen verstanden, in welche Bauteile insbesondere zu deren Bearbeitung eingespannt werden können. Die Komponenten zeichnen sich dadurch aus, dass sie zusammen mit anderen Komponenten letztendlich ein für die Handhabung und/oder Bearbeitung von Gegenständen einsetzbare Systeme bilden. Ein Automatisierungssystem kann beispielsweise an einem Roboterarm eine Automatisierungskomponente als Endeffektor aufweisen, die je nach Greifaufgabe austauschbar ist. Dabei können unterschiedlich ausgebildete, unterschiedlichen Anforderungen gerecht werdende Greifeinheiten bereitgestellt werden. Insbesondere können aus einem Greifbaukasten je nach Anwendungsfall unterschiedliche Greifeinheiten zur Einwechslung und zur Anordnung an den Roboterarm zur Verfügung gestellt werden. Entsprechend können andere Komponenten wie Lineareinheiten, Schwenkeinheiten oder andere Komponenten austauschbar sein.

In diesem Zusammenhang ist es entscheidend, dass das Automatisierungssystem oder das Spannsystem bzw. eine ihr jeweils zugeordnete Steuereinheit die jeweilige Komponente korrekt identifiziert.

Dazu ist beispielsweise bekannt, einzelne Komponenten mit unterschiedlichen Codes zu versehen, die nach einem Wechsel der Komponente von einer Ausleseeinheit des Systems ausgelesen werden. Bei den Codes kann es sich beispielsweise um Strichcodes oder um RFID-Tags handeln.

Dies hat den Nachteil, dass für das Bereitstellen der Codes sowie für das Auslesen der Codes zusätzliche Baugruppen und zusätzliche Auslesesysteme bereitgestellt werden müssen, die eine eigene Energieversorgung benötigen.

Die von der Erfindung betroffenen Komponenten weisen bewegliche Bauteile auf. Zur Feststellung der Position der jeweiligen Bauteile ist am jeweiligen Bauteil ein Signalgeber vorgesehen. Insbesondere sind Signalgeber bekannt, die ein Magnetfeld erzeugen, wie beispielsweise Permanentmagnete. Mit einer Sensoreinheit werden die Signale des Signalgebers erfasst und aus den erfassten Signalen kann letztlich die Position des beweglichen Bauteils bestimmt werden. Bei einer Greif- oder Spaneinheit handelt es sich bei den bewegten Bauteilen beispielsweise um die verfahrbaren Greif-oder Spannbacken oder um Getriebe- oder Antriebsteile, deren Bewegung proportional zur Bewegung der Backen ist. Bei Lineareinheiten handelt es sich bei dem bewegten Bauteil in der Regel um einen verfahrbaren Schlitten, an welchem der Signalgeber, beispielsweise ein Magnet, angeordnet ist. Bei Schwenkeinheiten handelt es sich bei dem verfahrbaren Bauteil um einen verschwenkbaren Schwenkteller oder ein mit dem Schwenkteller bewegungsgekoppeltes Ritzel. Auch hier kann der Signalgeber als Magnet ausgebildet sein.

Die Erfindung geht aus von einem Greifer mit einer magnetischen Positionserkennung, wie er aus der DE 38 13 708 A bekannt ist. Aus der JP S61 182740A und der JP H03 239451A sind Greifer bzw. Werkzeuge bekannt, bei denen zur Erkennung der Komponenten ein magnetischer Marker als zusätzliches, unabhängiges Sensorelement genutzt wird.

Der vorliegenden Erfindung liegt die Aufgabe zugrunde, ein Verfahren zur Identifikation einer Komponente bereitzustellen, welches insbesondere keine zusätzlichen Bauteile sowie keine zusätzlichen Energiequellen benötigt.

Diese Aufgabe wird gelöst durch ein Verfahren mit den Merkmalen des Patentanspruchs 1.

Durch ein solches Verfahren kann letztlich die zu identifizierende Komponente durch Vergleich ihrer erfassten, charakteristischen Magnetfeldwerte während der Referenzfahrt und/oder an der jeweiligen spezifischen Position mit hinterlegten Referenzwerten von möglichen, infrage kommenden Komponenten identifiziert werden. Nach dem Auswählen bzw. Identifizieren der spezifischen Komponente wird eine dieser Komponente zugeordnete Kenngröße an eine Steuereinheit zur weiteren Verarbeitung übersendet.

Durch ein derartiges Identifizieren der Komponenten kann eine deutlich vereinfachte Inbetriebnahme des Automatisierungs- oder Spannsystems erfolgen.

Hintergrund des Verfahrens ist, dass die Magnetfelder des Signalgebers je nach Komponente charakteristische Unterscheidungsmerkmale aufweist. Beispielsweise weisen unterschiedliche Greifeinheiten unterschiedliche Maximalhübe auf. Unterschiedliche Lineareinheiten weisen unterschiedliche Maximalhübe auf. Entsprechend weisen unterschiedliche Schwenkeinheiten unterschiedliche Bewegungsmuster auf. Zudem weisen unterschiedliche Komponenten Signalgeber auf, die unterschiedlich ausgeprägte Magnetfelder erzeugen. Auch prägen die sonstigen ferromagnetischen Bauteile der jeweiligen Komponente das Magnetfeld des Signalgebers, weshalb auch hier einzelne Komponenten, bzw. deren Signale unterschiedliche Magnetfelder erzeugen, deren charakteristischen Magnetfeldwerte letztlich ausgewertet werden. Mit anderen Worten: Jede spezifische Komponente weist ein eigenes, unverkennbares Magnetfeld auf, welches mit der Sensoreinheit erfasst wird und aufgrund dessen charakteristischer Werte letztlich auf die jeweilige Komponente rückgeschlossen werden kann.

Dabei ist zu berücksichtigen, dass bei einem Austausch der Komponente die Sensoreinheiten häufig nicht mit der Komponente zusammen ausgetauscht werden, sondern am System, beispielsweise am Roboterarm, verbleiben. Mit oder nach einem Austausch der Komponente werden diese Sensoreinheiten dann an der eingetauschten Komponente befestigt, beispielsweise in dort vorhandene Nuten eingeschoben. Dies hat den Vorteil, dass keine elektrischen Schnittstellen beim Austausch der Komponente für die Sensoreinheiten vorgesehen sein müssen; die vorhandenen Sensoreinheiten werden lediglich nach Austausch der Komponente an der eingetauschten Komponente befestigt.

Die Referenzwerte der jeweiligen spezifischen Komponenten werden mittels Kalibiermessungen bestimmt. Dabei wird eine ausreichend große Anzahl von identischen spezifischen Komponenten herangezogen, wobei deren charakteristischen Magnetfeldwerte während der Referenzfahrt und/oder in den spezifischen Positionen bestimmt, gemittelt und letztlich als Referenzwerte hinterlegt werden.

Vorteilhafterweise umfassen die ausgewerteten Magnetfeldwerte den Winkel und den Betrag des Magnetfeldvektors in der jeweiligen spezifischen Position. Es hat sich gezeigt, dass diese Magnetfeldwerte ausreichend zur eindeutigen Bestimmung des charakteristischen Magnetfelds der jeweiligen spezifischen Komponente sind.

Ferner ist vorteilhaft, wenn das Bauteil in zwei spezifische Positionen verfahren wird, beispielsweise in die beiden Endlagen des Bauteils, und wenn die ausgewerteten Magnetfeldwerte die Winkel und die Beträge der Magnetfeldvektoren in den beiden spezifischen Positionen umfassen. Bei einem Greifer können beispielsweise die spezifischen Positionen die Hubendlagen sein, also maximal geöffnete Greifer und maximal geschlossener Greifer.

Ferner ist vorteilhaft, wenn die ausgewerteten Magnetfeldwerte die Amplitude des sich im Verfahren des Bauteils von der einen spezifischen Position zur anderen spezifischen Position ändernden Magnetfelds umfassen. Auch dieser Wert kann als charakteristischer Wert herangezogen werden.

Vorzugsweise sind die Referenzwerte in einem Speicher der Recheneinheit, einem Speicher der Steuereinheit und/oder in einem Speicher einer dezentralen Datenbank hinterlegt. Die Referenzwerte können folglich lokal, zentral, dezentral und/oder auch in einer Cloud gespeichert sein.

Ferner ist vorteilhaft, wenn komponentenspezifische Parametersätze hinterlegt sind und wenn der Steuereinheit in Abhängigkeit der der jeweiligen spezifischen Komponente zugeordneten Kenngröße die komponentenspezifischen Parametersätze zur Verfügung gestellt werden. Wird folglich eine spezifische Komponente identifiziert, so wird nicht nur eine dieser Komponente zugeordnete Kenngröße übersandt, sondern zudem auch komponentenspezifische Parametersätze der Steuereinheit zur Verfügung gestellt. Die Zurverfügungstellung kann dabei beispielsweise ein Laden dieser Parametersätze in eine Speichereinheit der Steuereinheit sein. Vorzugsweise erfolgt die Zurverfügungstellung der Parametersätze automatisch, also ohne weitere Zwischenschritte und insbesondere ohne Zutun eines Maschinenbenutzers. Die Parametersätze können dabei beispielsweise maximale Verfahrwege, maximale Hübe, maximal zulässige Verfahr- und Verstellkräfte, von der Komponente benötigter Bauraum, Adaptierungsmöglichkeiten der Komponente, Toleranzen der Komponente, Schaltzeitpunkte der Komponente, so wie von der Komponente erzeugte Signale und zugehörige Bauteile beinhalten. Durch Zurverfügungstellung der Parametersätze erhält die Steuereinheit folglich automatisch sämtliche wesentlichen Information der identifizierten Komponente, so dass die Komponente von der Steuereinheit funktionssicher angesteuert werden kann.

Vorteilhafterweise ist zudem vorgesehen, dass im Betrieb der Komponente Störfelder erkannt und kompensiert werden, wobei zur Erkennung von Störfeldern die im Betrieb ausgewerteten Magnetfelder (Istzustand) mit den hinterlegten Referenzwerten (Sollzustand) verglichen werden. Insbesondere dann, wenn bei einem Vergleich eine Änderung der Magnetfeldvektoren in unterschiedlichen Raumrichtungen auftreten, kann auf ein Störfeld rückgeschlossen werden.

Ferner ist vorteilhaft, wenn in Betrieb der Komponente Temperaturschwankungen erkannt und kompensiert werden, wobei zur Erkennung von Temperaturschwankungen die ausgewerteten Magnetfelder (Istzustand) mit den Referenzwerten (Sollzustand) verglichen werden. Auf eine Temperaturschwankung kann insbesondere dann rückgeschlossen werden, wenn die Magnetfeldvektoren sich in allen Raumrichtungen gleichmäßig ändern.

Ferner ist denkbar, dass aufgrund der Identifizierung der Komponente spezielle Spezifikationen der identifizierten Komponente an den Benutzer gemeldet werden, beispielsweise auf einem Display angezeigt werden. Solche Spezifikationen können beispielsweise den Komponententyp, die Positioniergenauigkeiten, der maximale Hub des beweglichen Bauteils, Dauerbelastbarkeiten und dergleichen sein.

Die eingangs genannte Aufgabe wird auch gelöst durch eine Komponente, insbesondere eine Greifeinheit, eine Lineareinheit oder eine Schwenkeinheit gelöst, bei der die Steuereinheit und die Recheneinheit derart eingerichtet sind, dass sie in einem Identifikationsmodus die Komponente gemäß dem erfindungsgemäßen Verfahren auswählen und damit identifizieren.

Vorteilhafterweise ist der Signalgeber dabei als Permanentmagnet ausgebildet.

Ferner hat sich als vorteilhaft erwiesen, wenn die Sensoreinheit als 3D-Sensorelement, insbesondere als 3D-Hall-Sensor ausgebildet ist. Derartige Sensoren haben den Vorteil, dass Sie in allen drei Raumrichtungen die Magnetfeldstärke, bzw. den Betrag und die Richtung der jeweiligen Magnetfeldvektoren stimmen können. Vorteilhafterweise können ein, zwei oder mehrere derartiger Sensoreinheiten vorgesehen sein, um die Charakteristika des jeweiligen Magnetfeldes des Signalgebers zu erfassen.

Ferner ist vorteilhaft, wenn die Referenzwerte in einem Speicher der Rechnereinheit, einem Speicher der Steuereinheit und/oder in einer dezentralen oder auch zentralen Datenbank hinterlegt sind.

Bei dem Signalgeber kann es sich insbesondere um einen Permanentmagneten handeln. Denkbar ist auch, dass ein anderes ferromagnetisches Bauteil, welches ein charakteristisches Magnetfeld erzeugt, hierfür Verwendung finden kann.

Der Signalgeber kann beispielsweise bei einem Pneumatikgreifer am Greiferkolben, an der Greiferkolbenstange und/oder an einem Getriebebauteil, beispielweise einem Keilhakengetriebe, angeordnet sein. Die Sensoreinheit kann beispielsweise in das Gehäuse der Greifeinheit integriert sein oder am Gehäuse, beispielsweise in einer Nut des Gehäuses, befestigt sein. Ferner ist denkbar, dass der Signalgeber direkt an einer Backe der Greifeinrichtung vorgesehen ist.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.
- Figur 1:: zeigt eine schematische Darstellung einer erfindungsgemäßen Einrichtung; und
- Figur 2:: zeigt schematisch den Ablauf des erfindungsgemäßen Verfahrens.

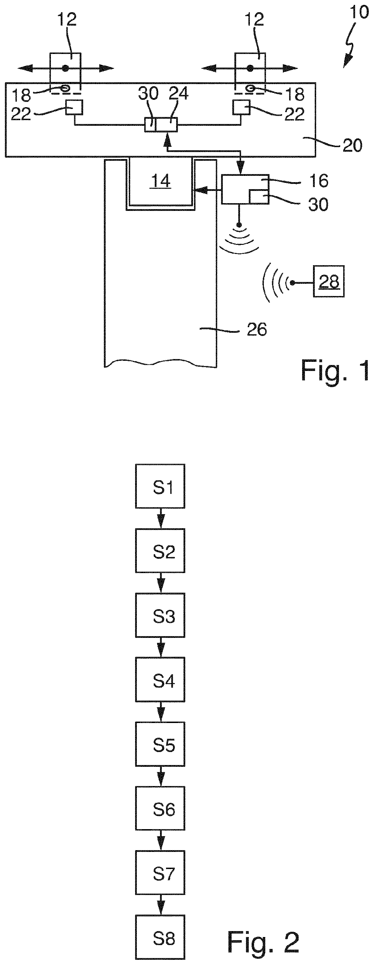

In der Figur 1 ist eine Komponente 10 in Form einer Greifeinheit gezeigt, die zwei aufeinander zu und voneinander weg verfahrbare Bauteile 12 in Form von Greiferbacken aufweist. Die beiden Greiferbacken 12 werden über einen Antrieb 14 angetrieben. Bei dem Antrieb kann es sich beispielsweise um einen Elektroantrieb oder um einen pneumatischen Antrieb, mit einer Zylinder-Kolben-Einheit handeln. Der Antrieb 14 wird von einer Steuereinheit 16 zum Antrieb der Bauteile 12 angesteuert.

An den Bauteilen 12 ist jeweils ein Signalgeber 18 in Form eines Elektromagneten vorgesehen. Am Gehäuse 20 der Greifeinheit 10 sind zwei Sensoreinheiten 22 vorgesehen, die in das Gehäuse 20 integriert sein können, oder die an der Außenseite des Gehäuses 20, beispielsweise in vorgesehenen Nuten, angeordnet sein können.

Ferner ist eine Recheneinheit 24 vorgesehen, die in der Figur 1 als separates Bauteil ausgebildet ist. Die Rechnereinheit 24 kann dabei auch in die Sensoreinheiten 22 integriert sein. Die Recheneinheit 24 dient zur Auswertung der von den Sensoreinheiten 22 erfassten Signale. Die Sensoreinheiten 22 dienen zur Erfassung der Magnetfelder der Signalgeber 18. Bei den Sensoreinheiten 22 handelt es sich insbesondere um 3D-Hall-Sensoren, die das von den Signalgebern 18 erzeugte Magnetfeld in allen drei Raumrichtungen bestimmen können.

Mit der Recheneinheit 24 kann folglich aus den von den Sensoreinheiten 22 erfassten Magnetfeldern auf die jeweilige Position der Bauteile 12 rückgeschlossen werden. Die Rechnereinheit 24 kommuniziert hierbei mit der Steuereinheit 16, so dass eine Ansteuerung des Antriebs 14 in Abhängigkeit der jeweiligen Position der Bauteile 12 erfolgen kann.

Die Steuereinheit 16 kann in das Gehäuse 20 der Greifeinheit 10 oder in den Antrieb 14 integriert sein oder als separate, übergeordnete Steuereinheit 16 ausgebildet sein, welche nicht nur die Greifeinheit 10 ansteuert, sondern auch weitere Komponenten eines Systems ansteuert.

Ebenfalls ist denkbar, dass der Antrieb 14 in die Greifeinheit 10 integriert ist. Greifeinheit 10 kann dabei am freien Ende eines Roboterarms 26 austauschbar angeordnet sein. Die Austauschbarkeit kann dabei derart sein, dass die Greifeinheit mit Gehäuse 20, den Bauteilen und dem Antrieb 14, aber ohne die Sensoreinheiten 22 und die Recheneinheit 24 ausgetauscht wird. Nach dem Austausch der Greifeinheit 10 werden dann die Sensoreinheiten 22 an der eingetauschten Greifeinheit angeordnet. Insbesondere nach einem Austausch der Greifeinheit 10 ist es erforderlich, die Greifeinheit 10 zu identifizieren.

Zur Identifikation der Greifeinheit 10 kann nun wie im Folgenden beschrieben verfahren werden, wobei die Greifeinheit 10 dazu in einem Identifikationsmodus betrieben wird, dessen einzelne Schritte in Figur 2 dargestellt sind:
In einem in Figur 2 gezeigten ersten Schritt S1 durchlaufen die beiden Bauteile 12 eine Referenzfahrt; sie werden von einer ersten spezifischen Position, nämlich der einen Hubendlage in eine zweite spezifische Position, nämlich in die andere Hubendlage verfahren.

In einem Schritt S2 werden dann die Magnetfeldwerte während des Verfahrens in der Referenzfahrt von Sensoreinheiten erfasst.

In einem Schritt S3 werden die erfassten Magnetfeldwerte ausgewertet, insbesondere im Hinblick auf den Winkel und die Beträge der Magnetfeldvektoren in den spezifischen Positionen sowie im Hinblick auf die Amplitude der Magnetfeldvektoren beim Verfahren zwischen den spezifischen Positionen.

In einem Schritt S4 werden die ausgewerteten Magnetfeldwerte mit hinterlegten Referenzwerten verglichen, wobei die hinterlegten Referenzwerte jeweils einer spezifischen Komponente zugeordnet sind.

In einem nächsten Schritt S5 wird letztlich die hinterlegte, spezifische Komponente ausgewählt, deren Referenzwerte mit den ausgewerteten Magnetfeldwerten übereinstimmen bzw. die größte Übereinstimmung aufweisen. Durch das Auswählen wird letztlich die zu identifizierende Komponente, bzw. im Fall des Ausführungsbeispiels gemäß Figur 1 die Greifeinheit 10 identifiziert.

In einem nächsten Schritt S6 wird letztlich eine Kenngröße an die Steuereinheit übersandt, die der identifizierten Komponente entspricht.

Die hinterlegten Referenzwerte können beispielsweise in einer dezentralen Datenbank 28 hinterlegt sein, welche mit der Steuereinheit 16 über Funk/WLAN verbunden ist. Denkbar ist auch, dass die Steuereinheit einen Speicher 30 und/oder dass die Recheneinheit 24 einen Speicher 30 umfasst, in welchen die hinterlegten Referenzwerte abgelegt sind.

Mit Erreichen von Schritt S6 dann der eigentliche Identifikationsmodus der Greifeinheit 10 abgeschlossen.

In einem Schritt S7 kann dann, je nach identifizierter Komponente, bzw. je nach an die Steuereinheit 16 übersandter Kenngröße ein zu der identifizierten Greifeinheit 10 passender Parametersatz der Steuereinheit 16 zur Verfügung gestellt werden. Der Parametersatz 16 kann dabei beispielsweise aus der Datenbank 28, bzw. aus den Speichern 30, geladen werden. Der Parametersatz enthält alle wesentlichen Informationen der Greifeinheit 10, wie beispielsweise maximale Verfahrwege, Hübe, maximal zulässige Verfahr- und Verstellkräfte, benötigter Bauraum, Adaptiermöglichkeiten, Toleranzen, verwendete Bauteile, Schaltzeitpunkte, Ausgangssignale und dergleichen.

Folglich erfolgt mit Schritt S7 automatisch, ohne weiteres Zutun eines Bedieners, ein Laden der Parametersätze der identifizierten Greifeinheit automatisiert.

Im Betrieb der Greifeinheit 10 kann ferner eine Störfeldkompensation sowie eine Temperaturkompensation in einem Schritt S8 erfolgen, um die Genauigkeit der Positionsbestimmung der Bauteile 12 zu erhöhen. Störfelder können beispielsweise dann erkannt werden, wenn sich die erfassten Magnetfeldvektoren sich in den Raumrichtungen unterschiedlich ändern. Ändern sich hingegen die Vektoren der Magnetfelder in alle Richtungen gleichmäßig, so kann auf eine Temperaturschwankung rückgeschlossen werden.

Nach dem Identifizieren ist denkbar, dass die zu der identifizierten Greifeinheit 10 zugehörigen Spezifikationen einem Benutzer zur Kenntnis gebracht werden, beispielsweise auf einem in der Figur nicht dargestellten Monitor dem Benutzer angezeigt werden.

Insgesamt kann mit der in der Figur 1 dargestellten Komponente und dem zugehörigen, in der Figur 2 gezeigten Identifikationsmodus eine Komponente auf sichere und einfach Art und Weise erkannt werden. Zusätzliche Bauteile oder zusätzliche Energiequellen zur Identifikation sind nicht erforderlich. Die Inbetriebnahme der Komponente kann auf einfache Art und Weise erfolgen. Ferner werden die zur identifizierten Komponente zugehörigen Parametersätze automatisiert nach deren Identifizierung ohne Eingriff eines Benutzers geladen.

## Patentansprüche

1. Verfahren zur Identifikation einer Komponente (10) eines Automatisierungssystems oder eines Spannsystems, wobei die Komponente (10) wenigstens ein beweglich verfahrbares Bauteil (12) aufweist, wobei am verfahrbaren Bauteil (12) ein Signalgeber (18) vorgesehen ist, der ein Magnetfeld erzeugt, und wobei wenigstens eine Sensoreinheit (22) zur Erfassung des Magnetfelds des Signalgebers (18) und eine Recheneinheit (24) zur Bestimmung der Position des Bauteils (12) aus dem von der Sensoreinheit (22) erfassten Magnetfeld vorgesehen ist,
aufweisend folgende Schritte:
- Verfahren des Bauteils (12) mit dem Signalgeber (18) an wenigstens eine spezifische Position,
- Erfassen der Magnetfeldwerte des Signalgebers (18) beim Verfahren in die spezifische Position oder an der spezifischen Position,
- Auswerten der erfassten Magnetfeldwerte,
- Vergleichen der ausgewerteten Magnetfeldwerte mit hinterlegten Referenzwerten,
**dadurch gekennzeichnet, dass** den hinterlegten Referenzwerten jeweils eine spezifische Komponente (10) zugeordnet ist,
weiter **gekennzeichnet durch** folgende Schritte:
- Auswählen der spezifischen Komponente (10), deren zugeordnete Referenzwerte mit den ausgewerteten Magnetfeldwerten übereinstimmen, und damit Identifizieren der Komponente (10),
- Übersenden einer der spezifischen Komponente (10) zugeordneten Kenngröße an eine Steuereinheit (16).

2. Verfahren nach Anspruch 1, **dadurch gekennzeichnet, dass** die ausgewerteten Magnetfeldwerte den Winkel und den Betrag des Magnetfeldvektors in der spezifischen Position umfassen.

3. Verfahren nach Anspruch 1 oder 2, **dadurch gekennzeichnet, dass** das Bauteil (12) in zwei spezifische Positionen verfahren wird und dass die ausgewerteten Magnetfeldwerte die Winkel und die Beträge der Magnetfeldvektoren in beiden spezifischen Positionen umfassen.

4. Verfahren nach Anspruch 3, **dadurch gekennzeichnet, dass** die beiden spezifischen Positionen die Endlagen des Bauteils (12) sind.

5. Verfahren nach Anspruch 3 oder 4, **dadurch gekennzeichnet, dass** die ausgewerteten Magnetfeldwerte die Amplitude des sich beim Verfahren des Bauteils (12) von der einen spezifischen Position zur anderen spezifischen Position ändernden Magnetfelds umfassen.

6. Verfahren nach einem der vorhergehenden Ansprüche, **dadurch gekennzeichnet, dass** die Referenzwerte in einem Speicher (30) der Recheneinheit (24), einem Speicher (30) der Steuereinheit (16) und/oder in einem Speicher einer Datenbank (28) hinterlegt sind.

7. Verfahren nach einem der vorhergehenden Ansprüche, **dadurch gekennzeichnet, dass** komponentenspezfische Parametersätze hinterlegt sind und dass der Steuereinheit (16) in Abhängigkeit der der jeweiligen spezifischen Komponente (10) zugeordneten Kenngröße die komponentenspezfischen Parametersätze zur Verfügung gestellt werden.

8. Verfahren nach einem der vorhergehenden Ansprüche, **dadurch gekennzeichnet, dass** im Betrieb der Komponente (10) Störfelder erkannt und kompensiert werden, wobei zur Erkennung von Störfeldern die ausgewerteten Magnetfelder mit den Referenzwerten verglichen werden.

9. Verfahren nach einem der vorhergehenden Ansprüche, **dadurch gekennzeichnet, dass** im Betrieb der Komponente (10) Temperaturschwankungen erkannt und kompensiert werden, wobei zur Erkennung von Temperaturschwankungen die ausgewerteten Magnetfelder mit den Referenzwerten verglichen werden.

10. Komponente (10) eines Automatisierungssystems oder eines Spannsystems, mit wenigstens einem beweglich verfahrbaren Bauteil (12), mit einen Antrieb (14) zum Verfahren des Bauteils (12), wobei am verfahrbaren Bauteil (12) ein Signalgeber (18) vorgesehen ist, der ein Magnetfeld erzeugt, mit wenigstens einer Sensoreinheit (22) zur Erfassung des Magnetfelds des Signalgebers (18), mit einer Recheneinheit (24), die derart eingerichtet ist, dass sie aus dem erfassten Magnetfeld die Position des Bauteils (12) bestimmt, und mit einer Steuereinheit (16) zur Ansteuerung des Antriebs (14), **dadurch gekennzeichnet, dass** die Steuereinheit (16) und die Recheneinheit (24) derart eingerichtet sind, dass sie in einem Identifikationsmodus die Komponente (10) gemäß dem Verfahren nach einem der vorherigen Ansprüche identifizieren.

11. Komponente (10) nach Anspruch 10, **dadurch gekennzeichnet, dass** der Signalgeber (18) als Permanentmagnet ausgebildet ist.

12. Komponente (10) nach Anspruch 10 oder 11, **dadurch gekennzeichnet, dass** die Sensoreinheit (22) als 3D Sensorelement ausgebildet ist.

## Claims

1. Method for identifying a component (10) of an automation system or a clamping system, the component (10) having at least one movable component (12), a signal transmitter (18) being provided on the movable component (12), which signal transmitter generates a magnetic field, and at least one sensor unit (22) being provided for detecting the magnetic field of the signal transmitter (18) and a computing unit (24) being provided for determining the position of the component (12) from the magnetic field detected by the sensor unit (22),
comprising the following steps:
- moving the component (12) with the signal transmitter (18) to at least one specific position,
- detecting the magnetic field values of the signal transmitter (18) when moving into the specific position or at the specific position,
- evaluating the detected magnetic field values,
- comparing the evaluated magnetic field values with stored reference values,
**characterized in that** a specific component (10) is assigned to each of the stored reference values,
further **characterized by** the following steps:
- selecting the specific component (10) of which the assigned reference values correspond to the evaluated magnetic field values, and thus identifying the component (10),
- transmitting a characteristic variable associated with the specific component (10) to a control unit (16).

2. Method according to claim 1, **characterized in that** the evaluated magnetic field values comprise the angle and the magnitude of the magnetic field vector in the specific position.

3. Method according to claim 1 or claim 2, **characterized in that** the component (12) is moved into two specific positions, and **in that** the evaluated magnetic field values comprise the angles and the magnitudes of the magnetic field vectors in the two specific positions.

4. Method according to claim 3, **characterized in that** the two specific positions are the end positions of the component (12).

5. Method according to claim 3 or claim 4, **characterized in that** the evaluated magnetic field values comprise the amplitude of the magnetic field changing when the component (12) is moved from one specific position to the other specific position.

6. Method according to any of the preceding claims, **characterized in that** the reference values are stored in a memory (30) of the computing unit (24), a memory (30) of the control unit (16) and/or in a memory of a database (28).

7. Method according to any of the preceding claims, **characterized in that** component-specific parameter sets are stored, and **in that** the component-specific parameter sets are made available to the control unit (16) depending on the characteristic variable associated with the relevant specific component (10).

8. Method according to any of the preceding claims, **characterized in that** during operation of the component (10), interference fields are identified and compensated for, with the evaluated magnetic fields being compared with the reference values in order to identify interference fields.

9. Method according to any of the preceding claims, **characterized in that** during operation of the component (10), temperature fluctuations are identified and compensated for, with the evaluated magnetic fields being compared with the reference values in order to identify temperature fluctuations.

10. Component (10) of an automation system or a clamping system, having at least one movable component (12), having a drive (14) for moving the component (12), a signal transmitter (18) being provided on the movable component (12), which signal transmitter generates a magnetic field, having at least one sensor unit (22) for detecting the magnetic field of the signal transmitter (18), having a computing unit (24) which is configured such that it determines the position of the component (12) from the detected magnetic field, and having a control unit (16) for controlling the drive (14), **characterized in that** the control unit (16) and the computing unit (24) are configured such that, in an identification mode, they identify the component (10) according to the method according to any of the preceding claims.

11. Component (10) according to claim 10, **characterized in that** the signal transmitter (18) is designed as a permanent magnet.

12. Component (10) according to claim 10 or claim 11, **characterized in that** the sensor unit (22) is designed as a 3D sensor element.

## Revendications

1. Procédé pour l'identification d'un composant (10) d'un système d'automatisation ou d'un système de serrage, dans lequel le composant (10) présente au moins une pièce (12) déplaçable de manière mobile, dans lequel un générateur de signaux (18) est prévu sur la pièce (12) déplaçable, qui produit un champ magnétique, et dans lequel au moins une unité capteur (22) pour l'acquisition du champ magnétique du générateur de signaux (18) et une unité de calcul (24) pour la détermination de la position de la pièce (12) à partir du champ magnétique acquis par l'unité capteur (22) est prévue,
présentant les étapes suivantes :
- le déplacement de la pièce (12) avec le générateur de signaux (18) sur au moins une position spécifique,
- l'acquisition des valeurs de champ magnétique du générateur de signaux (18) lors du déplacement dans la position spécifique ou sur la position spécifique,
- l'évaluation des valeurs de champ magnétique acquises,
- la comparaison des valeurs de champ magnétique évaluées à des valeurs de référence mises en mémoire,
**caractérisé en ce que** respectivement un composant (10) spécifique est associé aux valeurs de référence mises en mémoire,
**caractérisé en outre par** les étapes suivantes :
- la sélection du composant (10) spécifique, dont les valeurs de référence associées concordent avec les valeurs de champ magnétique évaluées, et ainsi l'identification du composant (10),
- l'envoi d'une grandeur caractéristique associée au composant (10) spécifique à une unité de commande (16).

2. Procédé selon la revendication 1, **caractérisé en ce que** les valeurs de champ magnétique évaluées englobent l'angle et le montant du vecteur de champ magnétique dans la position spécifique.

3. Procédé selon la revendication 1 ou 2, **caractérisé en ce que** la pièce (12) est déplacée dans deux positions spécifiques et que les valeurs de champ magnétique évaluées englobent les angles et les montants des vecteurs de champ magnétique dans les deux positions spécifiques.

4. Procédé selon la revendication 3, **caractérisé en ce que** les deux positions spécifiques sont les situations finales de la pièce (12).

5. Procédé selon la revendication 3 ou 4, **caractérisé en ce que** les valeurs de champ magnétique évaluées englobent l'amplitude du champ magnétique variant lors du déplacement de la pièce (12) à partir de la une position spécifique vers l'autre position spécifique.

6. Procédé selon l'une quelconque des revendications précédentes, **caractérisé en ce que** les valeurs de référence sont mises en mémoire dans une mémoire (30) de l'unité de calcul (24), une mémoire (30) de l'unité de commande (16) et/ou dans une mémoire d'une base de données (28).

7. Procédé selon l'une quelconque des revendications précédentes, **caractérisé en ce que** des ensembles de paramètres spécifiques au composant sont mis en mémoire et que les ensembles de paramètres spécifiques au composant sont fournis à l'unité de commande (16) en fonction de la grandeur caractéristique associée au composant (10) spécifique respectif.

8. Procédé selon l'une quelconque des revendications précédentes, **caractérisé en ce que** lors du fonctionnement du composant (10) des champs perturbateurs sont détectés et compensés, dans lequel pour la détection de champs perturbateurs les champs magnétiques évalués sont comparés à des valeurs de référence.

9. Procédé selon l'une quelconque des revendications précédentes, **caractérisé en ce que** lors du fonctionnement du composant (10) des fluctuations de température sont détectées et compensées, dans lequel pour la détection de fluctuations de température les champs magnétiques évalués sont comparés aux valeurs de référence.

10. Composant (10) d'un système d'automatisation ou d'un système de serrage, avec au moins une pièce (12) déplaçable de manière mobile, avec un entraînement (14) pour le déplacement de la pièce (12), dans lequel un générateur de signaux (18) est prévu sur la pièce (12) déplaçable, qui produit un champ magnétique, avec au moins une unité capteur (22) pour l'acquisition du champ magnétique du générateur de signaux (18), avec une unité de calcul (24), qui est configurée de telle sorte qu'elle détermine à partir du champ magnétique acquis la position de la pièce (12), et avec une unité de commande (16) pour la commande de l'entraînement (14), **caractérisé en ce que** l'unité de commande (16) et l'unité de calcul (24) sont conçues de telle sorte qu'elles identifient le composant (10) selon le procédé selon l'une quelconque des revendications précédentes dans un mode d'identification.

11. Composant (10) selon la revendication 10, **caractérisé en ce que** le générateur de signaux (18) est réalisé sous la forme d'un aimant permanent.

12. Composant (10) selon la revendication 10 ou 11, **caractérisé en ce que** l'unité capteur (22) est réalisée sous la forme d'un élément capteur 3D.
